# EUROPEAN PATENT APPLICATION

(11) **EP 4 477 912 A1**
(43) Date of publication of application: **18.12.2024**
(21) Application number: 23752668.6
(22) Date of filing: 24.01.2023
(51) Int. Cl.: F16D 63/00, F16D 67/02, F16D 65/16, F16D 127/06, F16D 127/10, F16D 41/067, F16D 41/10

(54) **CLUTCH UNIT**

(30) Priority: 10.02.2022 JP 2022019846; 21.07.2022 JP 2022116688
(71) Applicant: NTN Corporation, Osaka-shi Osaka 530-0005 (JP)
(72) Inventor: SASANUMA Kyohei, Iwata-shi, Shizuoka 438-8510 (JP); NAKAMURA Takatoshi, Iwata-shi, Shizuoka 438-8510 (JP); MIYAKO Yuki, Iwata-shi, Shizuoka 438-8510 (JP)
(74) Representative: Grünecker Patent- und Rechtsanwälte PartG mbB
(86) International application number: PCT/JP2023/002147
(87) International publication number: WO 2023/153200

(57) **Abstract**

To provide a clutch unit with an improved flexibility of mounting of a member that prevents rotation of a drive shaft to which a torque is transmitted from an output side. The clutch unit includes a disengaging part 55 and an elastic member 54. The disengaging part 55 is supported on an operating plate 42, which is an operating tool, in such a manner that the disengaging part 55 can rotate integrally with the operating plate 42 about the axis and moves, through rotation of the operating lever 40, at least one of the whole of a base part 51 and an engaging part 52 and the whole of a drive shaft-side engaging member 53 to an engaged position P1 in which the drive shaft-side engaging member 53 and the engaging part 52 are in contact with each other in such a state that the drive shaft-side engaging member 53 cannot rotate with respect to the base part 51 and the engaging part 52 about the axis and a disengaged position P2 in which the drive shaft-side engaging member 53 and the engaging part 52 are separate from each other in such a state that the drive shaft-side engaging member 53 can rotate with respect to the engaging part 52 about the axis, and the elastic member 54 is located between the drive shaft-side engaging member 53 and the base part 51. The elastic member 54 applies an elastic force to the drive shaft-side engaging member 53 and the base part 51 in a direction to make the drive shaft-side engaging member 53 and the base part 51 move from the disengaged position P2 to the engaged position P1.

## Description

### Technical Field

The present invention relates to a clutch unit.

### Background Art

There is a clutch unit for a vehicle seat lifter that lifts and lowers a seat of a vehicle, such as an automobile, through operation of an operating lever. The clutch unit includes an input-side clutch and an output-side clutch combined with each other via an output shaft member that transmits a torque. The input-side clutch transmits a torque input through operation of the operating lever to an input shaft of a seat lifting/lowering mechanism via the output shaft member. The output-side clutch transmits the torque input through operation of the operating lever to the output shaft member and cuts off a reverse input torque input from the input shaft of the seat lifting/lowering mechanism to the output shaft member.

With such a clutch unit, an input-side member and an output-side member are coupled to each other by a friction joint part. The clutch unit uses a frictional force that occurs at the friction joint part to transmit a torque input from the input-side member to the output-side member. With the clutch unit, an allowable torque that can be transmitted from the input-side member to the output-side member is determined based on the frictional force that occurs at the friction joint part. Therefore, with the clutch unit, in a case where a torque greater than the allowable torque is input from the output-side member because of an impact or the like, there are some cases where a slip occurs at the friction joint part, and the output-side member rotates with respect to the input-side member.

In view of this, a device (clutch unit) has been disclosed which adjusts an automobile interior component that can switch between a locked state in which a rotating element to which a torque is transmitted and a housing that rotatably supports the rotating element cannot rotate with respect to each other and an adjusted state in which the rotating element and the housing can rotate with respect to each other. For example, see Patent Literature 1. According to Patent Literature 1, a first lock member is fixed to a rotating element of a clutch unit, which is the device that adjusts an automobile interior component. A second lock member is fixed to a housing of the clutch unit. The clutch unit prevents rotation of the rotating element with respect to the housing when the clutch unit switches to the locked state in which the first lock member and the second lock member are engaged with each other.

### Citation List

### Patent Literature

Patent Literature 1: Japanese Translation of PCT International Application Publication No. 2015-534018

### Summary of Invention

### Technical Problem

One end of the second lock member of the clutch unit described in Patent Literature 1 is fixed to the housing and the other end of the second lock member is in contact with actuation means for switching the second lock member between the locked state and the adjusted state. The actuation means moves the other end of the second lock member to a position separate from the first lock member. In this way, the other end of the second lock member is switched by the actuation means between the adjusted state where the other end is separate from the first lock member and the locked state where the other end is engaged with the first lock member. That is, the second lock member is configured such that the second lock member can be elastically deformed from the locked state to the adjusted state by the actuation means. Furthermore, the second lock member is configured such that no fatigue fracture or the like occurs because of the stress caused by the elastic deformation. Therefore, the length of the second lock member from the one end fixed to the housing to the other end in contact with the actuation means is limited depending on the amount of the elastic deformation, and the flexibility of mounting to the clutch unit is low.

The present invention has been devised in view of the circumstances described above, and an object of the present invention is to provide a clutch unit with an improved flexibility of mounting of a member that prevents rotation of a drive shaft to which a torque is transmitted from an output side.

### Solution to Problem

A clutch unit according to the present invention includes: a drive shaft to which a torque about an axis is input from an outside; a housing that rotatably supports the drive shaft; a rotation prevention mechanism that prevents rotation of the drive shaft in one direction; and an operating tool that is supported by the drive shaft and rotates the drive shaft about the axis.

The clutch unit includes: a drive shaft-side engaging member that is supported by the drive shaft in such a manner that the drive shaft-side engaging member is not rotatable with respect to the drive shaft about the axis; a housing-side engaging member that is supported by the housing in such a manner that the housing-side engaging member is not rotatable with respect to the housing about the axis; a disengaging part that is supported by the operating tool in such a manner that the disengaging part is rotatable integrally with the operating tool about the axis; and an elastic member that is a member separate from the drive shaft-side engaging member and the housing-side engaging member and is located between the drive shaft-side engaging member and the housing-side engaging member. The disengaging part moves, through a rotational operation of the operating tool, the whole of at least one of the housing-side engaging member and the drive shaft-side engaging member from an engaged position in which the drive shaft-side engaging member and the housing-side engaging member are in contact with each other and the drive shaft-side engaging member is not rotatable with respect to the housing-side engaging member about the axis to a disengaged position in which the drive shaft-side engaging member and the housing-side engaging member are separate from each other and the drive shaft-side engaging member is rotatable with respect to the housing-side engaging member about the axis. The elastic member applies an elastic force to the drive shaft-side engaging member and the housing-side engaging member in a direction to make the drive shaft-side engaging member and the housing-side engaging member move from the disengaged position to the engaged position.

With the clutch unit according to the present invention configured as described above, one of the housing-side engaging member and the drive shaft-side engaging member that is moved by the disengaging part is moved as a whole by the disengaging part. Furthermore, the elastic member, which is a single component, is located between the housing-side engaging member and the drive shaft-side engaging member. The elastic member applies an elastic force to the housing-side engaging member and the drive shaft-side engaging member in a direction to make the housing-side engaging member and the drive shaft-side engaging member move from the disengaged position to the engaged position. Therefore, the housing-side engaging member and the drive shaft-side engaging member do not need to be elastically deformed to produce an elastic force in a direction to make the housing-side engaging member and the drive shaft-side engaging member move from the disengaged position to the engaged position. Therefore, the housing-side engaging member and the drive shaft-side engaging member can have any shape. Thus, the flexibility of mounting of the housing-side engaging member and the drive shaft-side engaging member that prevent rotation of the drive shaft to which a torque is transmitted from the output side can be improved.

The clutch unit according to the present invention preferably has the following configuration. The disengaging part moves the whole of at least one of the drive shaft-side engaging member and the housing-side engaging member with respect to the drive shaft-side engaging member in an axis direction or a radial direction perpendicular to the axis direction.

With the clutch unit according to the present invention configured as described above, the whole of at least one of the housing-side engaging member and the drive shaft-side engaging member is moved in the axis direction of the drive shaft or the radial direction. Therefore, the housing-side engaging member and the drive shaft-side engaging member do not need to be elastically deformed to produce an elastic force in a direction to make the housing-side engaging member and the drive shaft-side engaging member move from the disengaged position to the engaged position. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The drive shaft-side engaging member has a disk-like shape and has a plurality of concave and convex portions along an outer peripheral edge thereof. The housing-side engaging member has an annular shape and has a plurality of concave and convex portions along an inner peripheral edge thereof. In the engaged position, the plurality of concave and convex portions of the housing-side engaging member mate with the plurality of concave and convex portions of the drive shaft-side engaging member.

With the clutch unit according to the present invention configured as described above, in the engaged position, the position of the drive shaft-side engaging member with respect to the housing-side engaging member is maintained by engagement between the plurality of concave and convex portions of the drive shaft-side engaging member and the plurality of concave and convex portions of the housing-side engaging member. In addition, since the drive shaft-side engaging member and the housing-side engaging member have the concave and convex portions arranged in the rotational direction, the housing-side engaging member can be engaged with the drive shaft-side engaging member when the housing-side engaging member rotates with respect to the drive shaft-side engaging member about the axis. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The disengaging part is a cam that moves at least one of the drive shaft-side engaging member and the housing-side engaging member.

With the clutch unit according to the present invention configured as described above, the drive shaft-side engaging member or the housing-side engaging member can be moved in the axis direction or the radial direction through a rotational operation of the operating tool about the axis. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The disengaging part is in contact with at least one of the drive shaft-side engaging member and the housing-side engaging member at a plurality of points.

With the clutch unit according to the present invention configured as described above, at least one of the drive shaft-side engaging member and the housing-side engaging member can be stably moved, regardless of the shapes of the drive shaft-side engaging member and the housing-side engaging member. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The housing-side engaging member has: a base part that is supported in such a manner that the base part is not rotatable with respect to the housing about the axis; and an engaging part that is fixed to the base part and is to be engaged with the drive shaft-side engaging member. The base part and the engaging part are separate components.

With such a configuration, the housing-side engaging member can be assembled after separately processing the base part and the engaging part. Therefore, the engaging part that is to be engaged with the drive shaft-side engaging member can be worked into any shape by laser working, press working or the like. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The base part and the engaging part are coupled to each other by clamping. Therefore, since the base part and the engaging part are coupled without using a fastening member, such as a screw, the housing-side engaging member can be compact. Therefore, the flexibility of mounting of the housing-side engaging member and the drive shaft-side engaging member that prevent rotation of the drive shaft to which a torque is transmitted from the output side can be improved.

In another aspect, the clutch unit according to the present invention preferably has the following configuration. The rotation prevention mechanism has: a rotating member that is supported by the drive shaft in such a manner that the rotating member is not rotatable with respect to the drive shaft about the axis; a fixed member that is supported by the housing in such a manner that the fixed member is not rotatable with respect to the housing and rotatably supports the drive shaft; a holding member that is located between the rotating member and the fixed member and, when the drive shaft rotates in one direction, holds the rotating member in such a manner that the rotating member is not rotatable with respect to the fixed member about the axis; and a disengaging member that is supported by the operating tool and, in response to operation of the operating tool, moves the holding member to a position in which the rotating member is rotatable with respect to the fixed member about the axis.

With such a configuration, the rotation prevention mechanism can be switched by the disengaging member between the state where the rotating member cannot rotate with respect to the fixed member and the state where the rotating member can rotate with respect to the fixed member. When a torque is input to the drive shaft from the output side (the side opposite to the operating tool), the rotation prevention mechanism maintains the state where the rotating member cannot rotate with respect to the fixed member. Therefore, with the clutch unit, the drive shaft rotates only when a torque is applied to the drive shaft through the operating tool.

In another aspect, the clutch unit according to the present invention preferably has the following configuration. The rotating member has a convex portion projecting outward in a radial direction on an outer edge thereof. The fixed member has a wall part extending in an axis direction on an outer side in the radial direction of the convex portion of the rotating member. The holding member is located between the wall part and the outer edge.

With such a configuration, the rotating member and the fixed member that are coupled to each other by friction with the holding member are kept unable to rotate with respect to each other by the engagement between the drive shaft-side engaging member and the housing-side engaging member. Therefore, even if a torque is input from the output side, rotation of the rotating member with respect to the fixed member can be prevented. The position of the rotating member with respect to the fixed member is maintained by a frictional force. Therefore, if an input torque is repeatedly input from the drive shaft, the rotating member may be displaced with respect to the fixed member. However, the clutch unit according to the present invention has the drive shaft-side engaging member and the housing-side engaging member that prevent movement of the rotating member with respect to the fixed member through fitting thereof and therefore can prevent movement of the rotating member with respect to the fixed member.

In another aspect, the clutch unit according to the present invention preferably has the following configuration. The disengaging part has: a cam part that moves the whole of at least one of the drive shaft-side engaging member and the housing-side engaging member from the engaged position to the disengaged position; and a connection part that connects the cam part to the operating tool. The cam part and the connection part are formed by a plate-shaped member as a single member.

With such a configuration, the disengaging part can be formed by a plate-shaped member as a single member having the cam part and the connection part. Therefore, even if the disengaging part has a complicated shape, the disengaging part can be easily produced compared with those produced by cutting, casting, forging or the like.

In another aspect, the clutch unit according to the present invention preferably has the following configuration. The disengaging part is formed by a plurality of cam parts that move the whole of at least one of the drive shaft-side engaging member and the housing-side engaging member from the engaged position to the disengaged position.

With such a configuration, the disengaging part can arrange a required number of cam parts for moving at least one of the drive shaft-side engaging member and the housing-side engaging member at appropriate positions on the operating tool.

In another aspect, the clutch unit according to the present invention preferably has the following configuration. The drive shaft-side engaging member has an insertion hole that has a flat engaging member-side engaging surface in at least a part of an inner peripheral surface thereof. The drive shaft has a flat drive shaft-side engaging surface in at least a part of an outer peripheral surface thereof. The drive shaft is inserted in the insertion hole with at least a part of the drive shaft-side engaging surface in contact with at least a part of the engaging member-side engaging surface.

With such a configuration, the capability of preventing rotation of the drive shaft with respect to the drive shaft-side engaging member can be improved compared with the case where the drive shaft is fixed to the drive shaft-side engaging member only by press-fitting.

### Advantageous Effects of Invention

According to an embodiment of the present invention, the flexibility of mounting of a member that prevents rotation of a drive shaft to which a torque is transmitted from an output side can be improved.

### Brief Description of Drawings

[Fig. 1] Fig. 1 is a cross-sectional view in an axis direction showing a configuration of a lock mechanism in an engaged position in a clutch unit according to an embodiment 1 of the present invention.
[Fig. 2] Fig. 2 is a cross-sectional view taken along the arrow A in Fig. 1.
[Fig. 3] Fig. 3 is a cross-sectional view taken along the arrow B in Fig. 1.
[Fig. 4] Fig. 4 is a cross-sectional view taken along the arrow A in Fig. 1, showing a state where a torque is input from an input side.
[Fig. 5] Fig. 5 is a cross-sectional view taken along the arrow B in Fig. 1, showing a state where a torque is input from the input side.
[Fig. 6] Fig. 6 is an exploded perspective view of components of the lock mechanism arranged in the axial direction.
[Fig. 7] Fig. 7 includes a plan view and a side view of the lock mechanism in the engaged position in the clutch unit according to the embodiment 1 of the present invention.
[Fig. 8] Fig. 8 includes a plan view and a side view of the lock mechanism in a disengaged position in the clutch unit according to the embodiment 1 of the present invention.
[Fig. 9] Fig. 9 is a cross-sectional view in the axis direction showing a configuration of the lock mechanism in the disengaged position in the clutch unit according to the embodiment 1 of the present invention.
[Fig. 10] Fig. 10 is an exploded perspective view of components of a lock mechanism arranged in the axial direction, the lock mechanism having a disengaging part that is a variation of a disengaging part according to the embodiment 1 of the present invention.
[Fig. 11] Fig. 11 is a plan view of a drive shaft and a drive shaft-side engaging member, in a fixed state, that are variations of a drive shaft and a drive shaft-side engaging member according to the embodiment 1 of the present invention.

### Description of Embodiments

### (Embodiment 1)

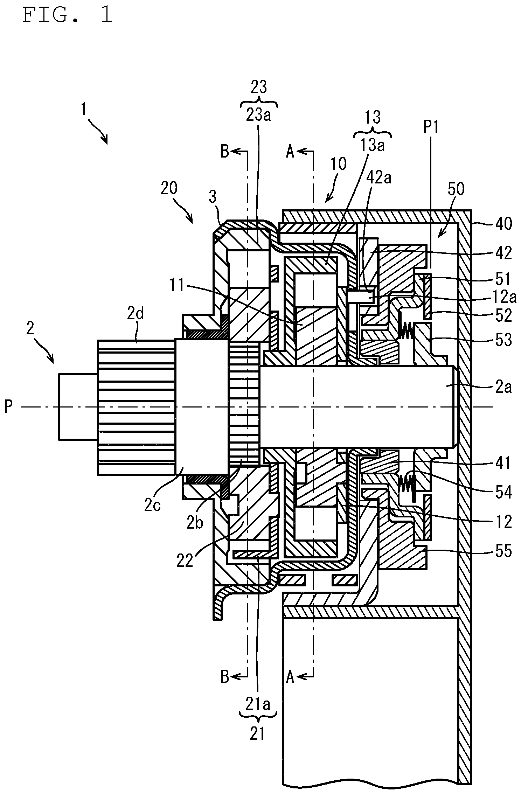

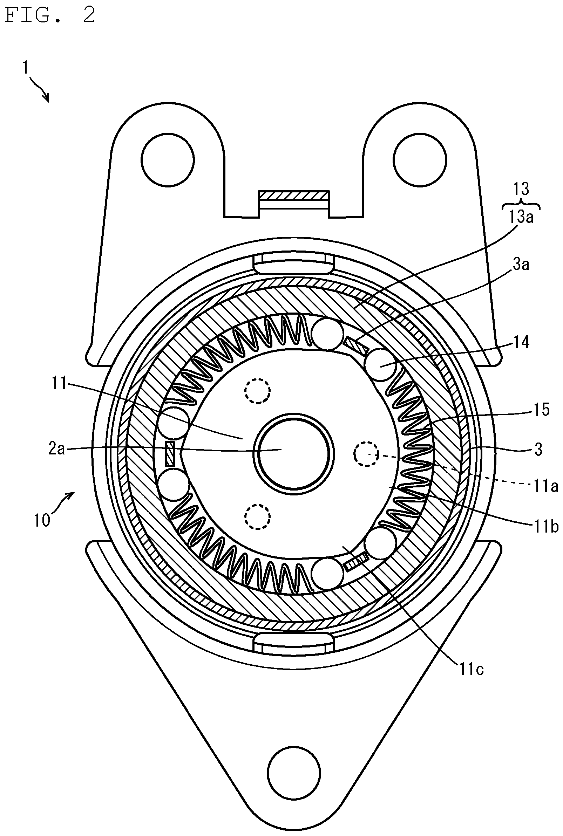

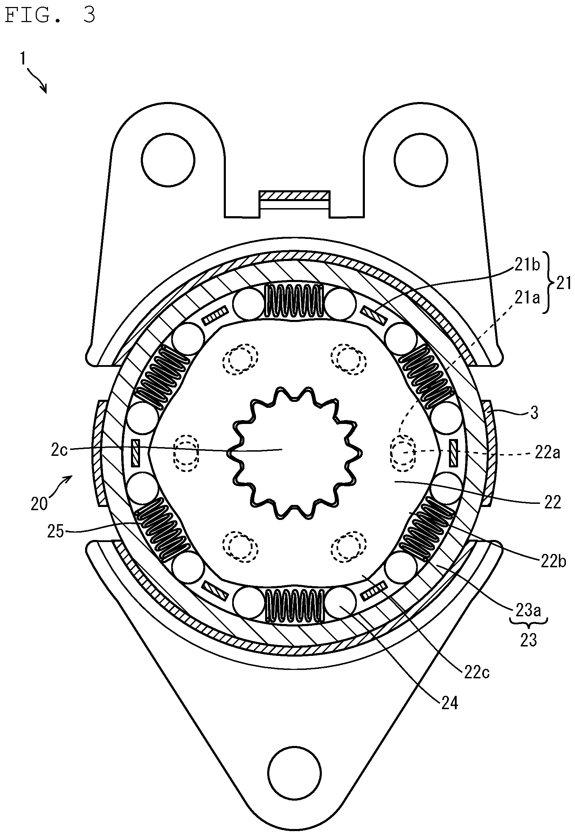

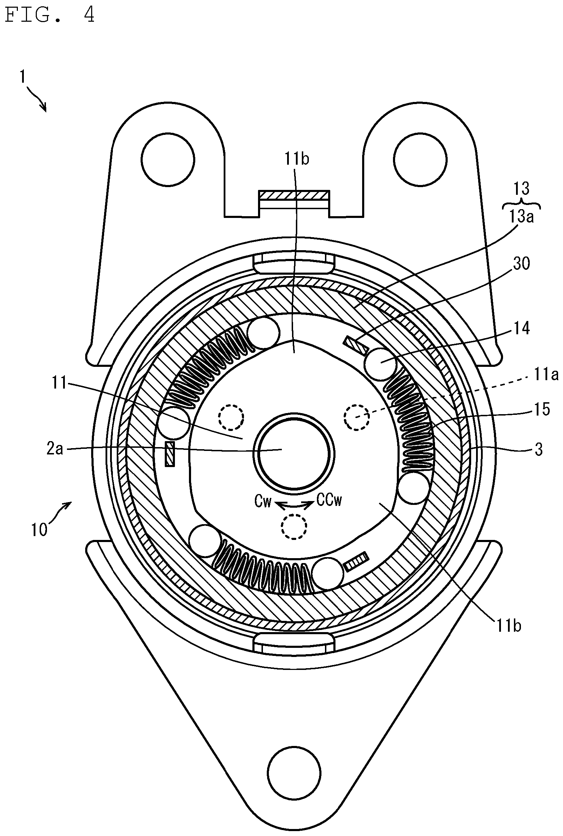

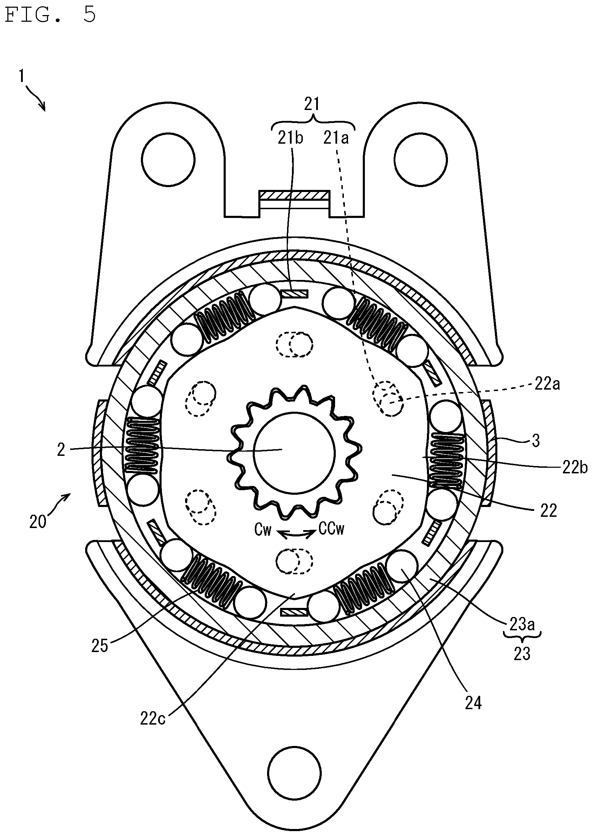

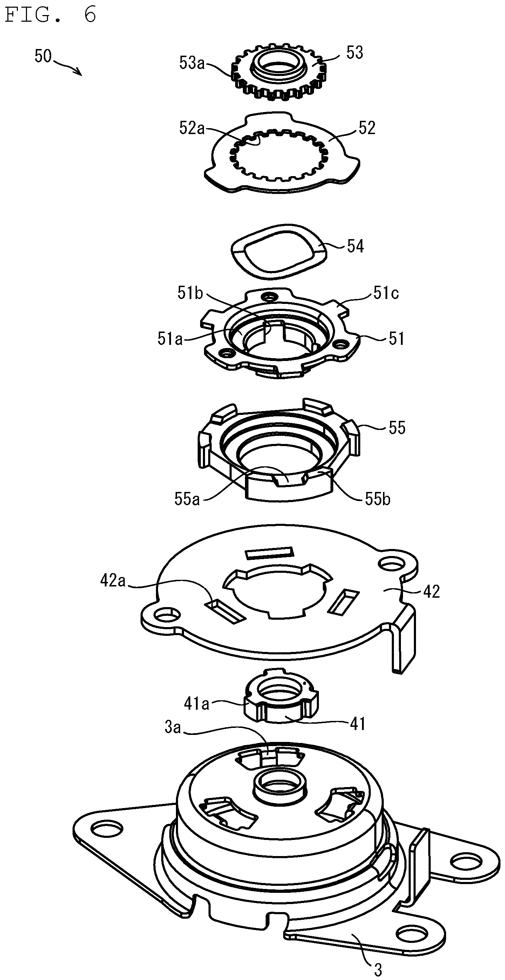

In the following, a clutch unit 1, which is a clutch unit according to an embodiment 1 of the present invention, will be described with reference to Figs. 1 to 6. Fig. 1 is a cross-sectional view in an axis direction showing a configuration of a lock mechanism 50 in an engaged position P1 in the clutch unit 1 according to an embodiment 1 of the present invention. Fig. 2 is a cross-sectional view taken along the arrow A in Fig. 1. Fig. 3 is a cross-sectional view taken along the arrow B in Fig. 1. Fig. 4 is a cross-sectional view taken along the arrow A in Fig. 1, showing a state where a torque is input from an input side. Fig. 5 is a cross-sectional view taken along the arrow B in Fig. 1, showing a state where a torque is input from the input side. Fig. 6 is an exploded perspective view of components of the lock mechanism 50 arranged in the axial direction.

As shown in Figs. 1 and 2, the clutch unit 1 is a clutch unit used for height adjustment of a vehicle seat or the like. The clutch unit 1 is an apparatus that transmits a torque input from the input side to a drive shaft 2 and prevents the drive shaft 2 from rotating when a torque is input to the drive shaft 2. The clutch unit 1 includes the drive shaft 2, a housing 3, an input-side clutch 10, an output-side clutch 20, an operating lever 40 and the lock mechanism 50 (see Figs. 1 and 6).

In this embodiment, the axis direction means a direction in which an axis P of the drive shaft 2 extends. A radial direction means a direction perpendicular to the axis P. A circumferential direction means a direction of rotation about the axis P. A clockwise Cw direction means a direction of right-handed rotation of the drive shaft 2 viewed from the input side in the direction of the axis P. A counterclockwise CCw direction means a direction of left-handed rotation of the drive shaft 2 viewed from the input side in the direction of the axis P.

The drive shaft 2 supports the input-side clutch 10, the output-side clutch 20 and the lock mechanism 50 and transmits a torque. Provided that one end of the drive shaft 2 is an input-side end, the drive shaft 2 has an input-side supporting part 2a, a spline part 2b, an output-side supporting part 2c, and a pinion gear 2d in this order from the input-side end to an output-side end.

The input-side supporting part 2a is a cylindrical axial part. The input-side supporting part 2a extends from the input-side end of the drive shaft 2 toward the output side with the center thereof aligned with the axis P. The spline part 2b is a spline axial part having a larger outer diameter than the input-side supporting part 2a. The spline part 2b is located adjacent to the output side of the input-side supporting part 2a. The spline part 2b extends from the output-side end of the input-side supporting part 2a toward the output side with the center thereof aligned with the axis P. The output-side supporting part 2c is an axial part having a larger outer diameter than the spline part 2b. The output-side supporting part 2c is located adjacent to the output side of the spline part 2b. The output-side supporting part 2c extends from the output-side end of the spline part 2b toward the output side with the center thereof aligned with the axis P. The pinion gear 2d is a gear that transmits a torque input to the drive shaft 2 to the outside. The pinion gear 2d is located adjacent to the output side of the output-side supporting part 2c. The pinion gear 2d is a gear that rotates about the axis P.

The housing 3 is a casing that houses the drive shaft 2, the input-side clutch 10 and the output-side clutch 20. The housing 3 has a cylindrical shape having a bottom part. The housing 3 rotatably supports the input-side supporting part 2a of the drive shaft 2 with the bottom part facing the input side. The housing 3 has a flange that is to be fixed to an external frame or the like. The cylindrical part of the housing 3 provides an internal space capable of housing the input-side clutch 10 and the output-side clutch 20. On the bottom part, the housing 3 has three positioning claws 3a extending toward the output side (see Fig. 6). The positioning claws 3a are stoppers for maintaining the positions of input-side holding members 14 of the input-side clutch 10.

The input-side clutch 10 is a friction clutch that transmits a torque in a predetermined rotation angle range to the output side. The input-side clutch 10 includes an input-side first rotating member 11, which is a first rotating member, an input-side second rotating member 13, which is a second rotating member, the input-side holding members 14, which are holding members, and input-side springs 15.

The input-side first rotating member 11 is a cylindrical member that extends in the direction of the axis P. The input-side first rotating member 11 is supported by the input-side supporting part 2a of the drive shaft 2 with the center thereof aligned with the axis P of the drive shaft 2. The input-side first rotating member 11 is located closer to the output side than the bottom part of the housing 3 in the cylindrical part of the housing 3. The input-side first rotating member 11 is supported so as to be rotatable with respect to the input-side supporting part 2a about the axis P.

The input-side first rotating member 11 has projections 11a on an input-side side surface thereof (see Fig. 2). An outer peripheral edge of the input-side first rotating member 11 includes arc-shaped parts 1 1b and input-side wedge parts 11c projecting radially outward from the arc-shaped parts 11b. The input-side wedge part 11c has the wedge effect. In this embodiment, there are three input-side wedge parts 11c arranged at regular intervals in the circumferential direction. The arc-shaped parts 11b and the three input-side wedge parts 11c are connected to each other in a smooth curve. In this way, the outer peripheral edge of the input-side first rotating member 11 forms a cam that rotates about the axis P.

An operating bracket 12 is fixed to the input-side side surface of the input-side first rotating member 11 via the projections 11a. The operating bracket 12 has a plurality of engaging claws 12a that extend toward the input side in the axis direction. The engaging claw 12a passes through a through-hole in the bottom part of the housing 3 and is engaged with an operating slotted hole 42a in an operating plate 42 described later. That is, the input-side first rotating member 11 can be rotated by the operating plate 42 via the operating bracket 12.

The input-side second rotating member 13 is a cylindrical member including an input-side cylindrical part 13a, which is a wall part, and a bottom part. The input-side second rotating member 13 is supported by the input-side supporting part 2a of the drive shaft 2 with the bottom part facing the output side and the center thereof aligned with the axis P of the drive shaft 2. The input-side second rotating member 13 is supported so as to be rotatable with respect to the input-side supporting part 2a about the axis P. The input-side second rotating member 13 is located closer to the output side than the input-side first rotating member 11 in the cylindrical part of the housing 3. The input-side first rotating member 11 is located in the input-side cylindrical part 13a of the input-side second rotating member 13. The input-side cylindrical part 13a is located on the radially outward of the input-side first rotating member 11. An inner surface of the input-side cylindrical part 13a faces the outer peripheral edge of the input-side first rotating member 11.

The input-side holding member 14 is a member that maintains the position of the input-side second rotating member 13 with respect to the input-side first rotating member 11 (see Fig. 2). In this embodiment, the input-side holding member 14 is a cylindrical roller, for example. The input-side holding member 14 that is a cylindrical roller is located between the input-side cylindrical part 13a, which is a wall part of the input-side second rotating member 13, and the outer peripheral edge of the input-side first rotating member 11 with the axis thereof parallel to the axis P of the drive shaft 2. Such input-side holding members 14 are disposed on opposite sides of each input-side wedge part 11c of the input-side first rotating member 11. In this embodiment, the input-side holding members 14 are comprised of six cylindrical rollers, two for each of the three input-side wedge parts 11c. The positioning claw 3a of the housing 3 is disposed between the input-side holding members 14 disposed on opposite sides of each of the three input-side wedge parts 11c (see Fig. 2).

The input-side holding member 14 has an outer diameter that is smaller than the distance between the arc-shaped part 11b of the input-side first rotating member 11 and the input-side cylindrical part 13a of the input-side second rotating member 13 and is larger than the distance between the input-side wedge part 11c of the input-side first rotating member 11 and the input-side cylindrical part 13a. As the input-side wedge part 11c moves toward the input-side holding member 14, the input-side holding member 14 is pinched between the input-side wedge part 11c and the input-side cylindrical part 13a. A frictional force occurs between the input-side holding member 14 and the input-side wedge part 11c and between the input-side holding member 14 and the input-side cylindrical part 13a. In this way, the input-side holding member 14 prevents rotation of the input-side second rotating member 13 with respect to the input-side first rotating member 11. The input-side holding member 14 is not pinched between the input-side wedge part 11c and the input-side cylindrical part 13a in the arc-shaped part 11b.

The input-side springs 15 maintain the positions of the input-side holding members 14 with respect to the input-side first rotating member 11. The input-side spring 15 is located between input-side holding members 14 between adjacent input-side wedge parts 11c of the input-side first rotating member 11. When one input-side holding member 14 is coming close to the other input-side holding member 14, the input-side spring 15 presses the one input-side holding member 14 against the positioning claw 3a of the housing 3. That is, the input-side spring 15 maintains any input-side holding member 14 that is not pinched between the input-side wedge part 11c of the input-side first rotating member 11 and the input-side cylindrical part 13a of the input-side second rotating member 13 at a position adjacent to the positioning claw 3a.

As shown in Fig. 4, when the input-side first rotating member 11 of the input-side clutch 10 rotates in one direction (the counterclockwise CCw direction, for example), an input-side holding member 14 moves toward an input-side wedge part 11c along the outer peripheral edge of the input-side first rotating member 11. The input-side holding member 14 is pinched between the input-side wedge part 11c and the input-side cylindrical part 13a of the input-side second rotating member 13 due to the wedge effect of the input-side wedge part 11c. In this way, the input-side clutch 10 transmits the torque on the input-side first rotating member 11 to the input-side second rotating member 13 via the input-side holding member 14. After rotation in the one direction, if the input-side first rotating member 11 of the input-side clutch 10 rotates in the other direction (the clockwise Cw direction, for example), the input-side holding member 14 pinched between the input-side wedge part 11c and the input-side cylindrical part 13a comes off the input-side wedge part 11c or the input-side cylindrical part 13a. As a result, in the input-side clutch 10, only the input-side first rotating member 11 rotates.

As shown in Figs. 1 and 3, the output-side clutch 20, which is a rotation restriction mechanism that restricts rotation of the drive shaft 2, is a friction clutch that transmits a torque about the axis P input from the input side (through operation of the operating lever 40) to the output side in a predetermined rotation angle range and does not transmit a torque input from the output side. The output-side clutch 20 includes a releasing bracket 21, an output-side rotating member 22, which is a rotating member, an output-side fixed member 23, which is a fixed member, output-side holding members 24, which are holding members, and output-side springs 25.

The releasing bracket 21, which is a releasing member, is a member that couples the input-side clutch 10 and the output-side clutch 20. In addition, the releasing bracket 21 is a bracket that moves the output-side holding member 24 with respect to the output-side rotating member 22. The releasing bracket 21 is fixed to a bottom part of the input-side second rotating member 13 with the center thereof aligned with the axis P of the drive shaft 2. The releasing bracket 21 is located closer to the input side than the spline part 2b of the drive shaft 2. The releasing bracket 21 has arc-shaped releasing slotted holes 21a that extend in the circumferential direction. The releasing bracket 21 also has six releasing claws 21b that extend toward the output side. The releasing claw 21b displaces the output-side holding member 24.

The output-side rotating member 22 is a cylindrical member that extends in the direction of the axis P. The output-side rotating member 22 is supported by the spline part 2b of the drive shaft 2 with the center thereof aligned with the axis P of the drive shaft 2 so as not to be rotatable. The output-side rotating member 22 is located closer to the output side than the input-side second rotating member 13 in the cylindrical part of the housing 3.

The output-side rotating member 22 has projections 22a formed on an input-side side surface thereof (see Fig. 3). An outer peripheral edge of the output-side rotating member 22 includes arc-shaped parts 22b and output-side wedge parts 22c projecting radially outward from the arc-shaped parts 22b. The output-side wedge part 22c has the wedge effect. In this embodiment, there are six output-side wedge parts 22c arranged at regular intervals in the circumferential direction. The six output-side wedge parts 22c are connected to each other in a smooth curve. In this way, the outer peripheral edge of the output-side rotating member 22 forms a cam that rotates about the axis P.

The projections 22a of the output-side rotating member 22 are inserted in the releasing slotted holes 21a of the releasing bracket 21. When the projections 22a come into contact with circumferential ends of the releasing slotted holes 21a, a torque on the releasing bracket 21 is transmitted to the output-side rotating member 22. That is, when the releasing bracket 21 rotates a predetermined angle, the output-side rotating member 22 starts rotating with the releasing bracket 21 and the input-side second rotating member 13.

The output-side fixed member 23 is a cylindrical member including an output-side cylindrical part 23a, which is a wall part, and a bottom part. The output-side fixed member 23 is supported by the output-side supporting part 2c of the drive shaft 2 with the bottom part facing the output side and the center thereof aligned with the axis P of the drive shaft 2. The output-side fixed member 23 is supported so as to be rotatable about the axis P with respect to the output-side supporting part 2c. The output-side fixed member 23 is located closer to the output side than the output-side rotating member 22 in the cylindrical part of the housing 3. The output-side fixed member 23 is fixed to the cylindrical part of the housing 3. That is, the output-side fixed member 23 supports the drive shaft 2. Therefore, the housing 3 supports the drive shaft 2 via the output-side fixed member 23. The output-side rotating member 22 is located in the output-side cylindrical part 23a of the output-side fixed member 23. The output-side cylindrical part 23a is located on the radially outward of the output-side rotating member 22. An inner surface of the output-side cylindrical part 23a faces the outer peripheral edge of the output-side rotating member 22.

The output-side holding member 24 is a member that maintains the position of the output-side fixed member 23 with respect to the output-side rotating member 22. In this embodiment, the output-side holding member 24 is a cylindrical roller, for example. The output-side holding member 24 that is a cylindrical roller is located between the output-side cylindrical part 23a of the output-side fixed member 23 and the outer peripheral edge of the output-side rotating member 22 with the axis thereof parallel to the axis P of the drive shaft 2. Such output-side holding members 24 are disposed on opposite sides of each output-side wedge part 22c of the output-side rotating member 22. In this embodiment, the output-side holding members 24 are comprised of twelve cylindrical rollers, two for each of the six output-side wedge parts 22c. The releasing claw 21b of the releasing bracket 21 is disposed between the output-side holding members 24 disposed on opposite sides of each of the six output-side wedge parts 22c.

The output-side holding member 24 has an outer diameter that is smaller than the distance between the arc-shaped part 22b of the output-side rotating member 22 and the output-side cylindrical part 23a of the output-side fixed member 23 and is larger than the distance between the output-side wedge part 22c of the output-side rotating member 22 and the output-side cylindrical part 23a. As the output-side wedge part 22c moves toward the output-side holding member 24, the output-side holding member 24 is pinched between the output-side wedge part 22c and the output-side cylindrical part 23a. A frictional force occurs between the output-side holding member 24 and the output-side wedge part 22c and between the output-side holding member 24 and the output-side cylindrical part 23a. In this way, the output-side holding member 24 prevents rotation of the output-side rotating member 22 with respect to the output-side fixed member 23. The output-side holding member 24 is not pinched between the output-side wedge part 22c and the output-side cylindrical part 23a in the arc-shaped part 22b.

The output-side springs 25 maintain the positions of the output-side holding members 24 with respect to the output-side rotating member 22. The output-side spring 25 is located between output-side holding members 24 between adjacent output-side wedge parts 22c of the output-side rotating member 22. The output-side spring 25 presses the output-side holding members 24 on the opposite sides thereof against the respective output-side wedge parts 22c. That is, the output-side spring 25 presses the output-side holding members 24 against the output-side wedge parts 22c so that the output-side holding member 24 is pinched between the output-side wedge part 22c and the output-side cylindrical part 23a of the output-side fixed member 23.

As shown in Fig. 5, when the releasing bracket 21 of the output-side clutch 20 rotates in one direction (the counterclockwise CCw direction, for example), an output-side holding member 24 located between the output-side wedge part 22c and the output-side cylindrical part 23a moves to come off the output-side wedge part 22c. That is, the releasing bracket 21 moves the output-side holding member 24 to a position where the output-side rotating member 22 can rotate with respect to the output-side fixed member 23 about the axis P. As the releasing bracket 21 further rotates in the one direction, the output-side rotating member 22 rotates with the releasing bracket 21 in the one direction. As a result, the drive shaft 2, which supports the output-side rotating member 22 in such a manner that the drive shaft 2 and the output-side rotating member 22 cannot rotate with respect to each other, rotates with the output-side rotating member 22. Similarly, when the releasing bracket 21 rotates in the other direction (the clockwise Cw direction, for example), the output-side rotating member 22 rotates with the releasing bracket 21 in the other direction. With the output-side clutch 20, when a torque is input to the drive shaft 2, the torque is transmitted to the output-side rotating member 22. However, since the output-side holding members 24 located on opposite sides of the output-side wedge parts 22c are pinched between the output-side wedge parts 22c and the output-side cylindrical part 23a, the output-side rotating member 22 does not rotate in the one direction and the other direction.

As shown in Fig. 1, the operating lever 40 and the operating plate 42, which are operating tools, transmit a torque input by an operator to the drive shaft 2. The operating lever 40 is fixed to the operating plate 42. The operating lever 40 includes a cylindrical cover part having a bottom part that covers the lock mechanism 50 disposed on the operating plate 42 and a grip part to be grasped by the operator. The grip part is a bar-shaped member that extends from the cover part in the radial direction. The cover part of the operating lever 40 is fixed to the operating plate 42 so as to cover the lock mechanism 50. That is, the operating lever 40 can rotate integrally with the operating plate 42 about the axis P.

As shown in Fig. 6, a bushing 41 is a member that supports the operating plate 42. The bushing 41 is located outside the housing 3, closer to the input side than the bottom part of the housing 3. The bushing 41 is supported by the housing 3 with the center thereof aligned with the axis P of the drive shaft 2. The bushing 41 is supported so as not to be rotatable with respect to the housing 3 about the axis P. The bushing 41 has detent projections 41a on an outer surface thereof. The projection 41a has an arc-shaped outer surface.

The operating plate 42 is a member that supports the operating lever 40. The operating plate 42 is supported on the outer surfaces of the projections 41a of the bushing 41. The operating plate 42 is supported so as to be rotatable with respect to the bushing 41 about the axis P. The engaging claws 12a of the operating bracket 12 fixed to the input-side first rotating member 11 are inserted in the operating slotted holes 42a of the bottom part of the housing 3, which extend in an arc in the circumferential direction.

When the operating plate 42 is rotated a predetermined angle about the axis P, the engaging claws 12a of the operating bracket 12 come into contact with circumferential ends of the operating slotted holes 42a. Thus, the operating plate 42 rotates integrally with the input-side first rotating member 11 via the operating bracket 12. That is, the operating plate 42 does not rotate with the input-side first rotating member 11 until the operating plate 42 is rotated a predetermined angle about the axis P.

As shown in Figs. 1 and 6, the lock mechanism 50 is a mechanism that prevents rotation of the drive shaft 2 with respect to the housing 3. The lock mechanism 50 includes a base part 51 and an engaging part 52 that form a housing-side engaging member, a drive shaft-side engaging member 53, an elastic member 54, and a disengaging part 55.

The base part 51 is a cylindrical member that supports the engaging part 52. A predetermined output-side portion of the base part 51 has a smaller inner diameter than a predetermined input-side portion thereof. That is, the inner peripheral surface of the base part 51 includes a step surface 51a facing the input side. The base part 51 has notches 51b extending in the axial direction at the output-side end thereof. The bushing 41 is inserted into the base part 51 from the output side. The projections 41a of the bushing 41 are inserted into the notches 51b. That is, the base part 51 is supported by the bushing 41 so as not to be rotatable with respect to the bushing 41 about the axis P. That is, the base part 51 is supported so as not to be rotatable with respect to the housing 3 via the bushing 41. The base part 51 is also supported so as to be movable with respect to the bushing 41 in the direction of the axis P. The base part 51 has a supporting part 51c projecting in the radial direction at the input-side end thereof. The supporting part 51c is a part that is to come into contact with the disengaging part 55.

The engaging part 52 is a plate-shaped member that is to be engaged with the drive shaft-side engaging member 53. The engaging part 52 is provided as a member separate from the base part 51. The engaging part 52 has a through-hole in which the drive shaft-side engaging member 53 can be inserted. The engaging part 52 has flange-side teeth 52a, which are convex portions projecting radially inward and concave portions, in at least a part of the inner peripheral edge of the through-hole. The engaging part 52 is fixed to an axial end of the base part 51 by clamping with the center of the through-hole coincident with the center of the base part 51. The diameter of the addendum circle of the flange-side teeth 52a is larger than the inner diameter of the step surface 5 1a of the base part 51.

The drive shaft-side engaging member 53 is a disk-shaped member that is to be engaged with the engaging part 52 forming the housing-side engaging member. The drive shaft-side engaging member 53 is supported on the input-side supporting part 2a of the drive shaft 2 with the center thereof aligned with the axis P of the drive shaft 2 in such a manner that the drive shaft-side engaging member 53 cannot rotate with respect to the input-side supporting part 2a about the axis P and cannot move in the axis direction. The drive shaft-side engaging member 53 is located on the input-side supporting part 2a at a position closer to the input side than the bushing 41.

The drive shaft-side engaging member 53 has drive shaft-side teeth 53a, which are convex portions projecting radially outward and concave portions, in at least a part of the outer peripheral edge thereof. The drive shaft-side teeth 53a are configured to mate with the flange-side teeth 52a of the engaging part 52 forming the housing-side engaging member. The diameter of the addendum circle of the drive shaft-side teeth 53a is larger than the inner diameter of the step surface 51a of the base part 51. That is, the drive shaft-side engaging member 53 overlaps with the step surface 51a of the base part 51 when viewed in the axis direction.

The elastic member 54 is a member that presses the base part 51 and the engaging part 52 toward the output side opposite to the drive shaft-side engaging member 53. The elastic member 54 is a wave washer, for example. The elastic member 54 is disposed between the step surface 51a of the base part 51 and the drive shaft-side engaging member 53. The elastic member 54 constantly applies an elastic force to the base part 51 and the drive shaft-side engaging member 53 in directions to separate the base part 51 and the drive shaft-side engaging member 53 from each other. In this embodiment, the elastic member 54 presses the base part 51 toward the output side opposite to the drive shaft-side engaging member 53.

The disengaging part 55 is a member that moves the whole of the base part 51 and the engaging part 52 forming the housing-side engaging member to the engaged position P1 in which the housing-side engaging member is engaged with the drive shaft-side engaging member 53 and a disengaged position P2 in which the housing-side engaging member is not engaged with the drive shaft-side engaging member 53. The disengaging part 55 is a substantially cylindrical cam member. The disengaging part 55 is fixed to the operating plate 42 with the center thereof coincident with the axis P of the drive shaft 2. That is, the disengaging part 55 can rotate integrally with the operating plate 42 about the axis P. The disengaging part 55 is located closer to the input side than the operating plate 42 and closer to the output side than the base part 51 forming the housing-side engaging member.

The disengaging part 55 has a concave portion 55a and a convex portion 55b at an end part in the axis direction, and the concave portion 55a and the convex portion 55b provide a cam for moving the base part 51 and the engaging part 52 in the axis direction. The convex portion 55b projects from the concave portion 55a in the axis direction. The concave portion 55a and the convex portion 55b are connected by an inclined surface. The concave portion 55a and the convex portion 55b overlap with the supporting part 51c of the base part 51 when viewed in the direction of the axis P. Therefore, the concave portion 55a and the convex portion 55b of the disengaging part 55 can come into contact with the supporting part 51c in the axis direction. Through rotation about the axis P, the disengaging part 55 can guide the supporting part 51c in contact with the concave portion 55a to the convex portion 55b along the inclined surface. Similarly, through rotation about the axis P, the disengaging part 55 can guide the supporting part 51c in contact with the convex portion 55b to the concave portion 55a along the inclined surface.

When the supporting part 51c of the base part 51 is in contact with the concave portion 55a, the flange-side teeth 52a of the engaging part 52 fixed to the base part 51 is located at the same position in the axis direction as the drive shaft-side teeth 53a of the drive shaft-side engaging member 53. That is, the flange-side teeth 52a is positioned in the engaged position P1 in which the flange-side teeth 52a is engaged with the drive shaft-side teeth 53a. When the supporting part 51c of the base part 51 is in contact with the convex portion 55b, the flange-side teeth 52a is located closer to the input side than the drive shaft-side teeth 53a. That is, the flange-side teeth 52a is positioned in the disengaged position P2 in which the flange-side teeth 52a is not engaged with the drive shaft-side teeth 53a.

In a neutral state of the lock mechanism 50 in which the operator is not operating the operating lever 40, the base part 51 and the engaging part 52 are positioned in the engaged position P1. With the clutch unit 1, therefore, in the neutral state, the position of the drive shaft 2 with respect to the housing 3 is maintained by the lock mechanism 50 through engagement between the housing-side engaging member and the drive shaft-side engaging member 53. Therefore, with the clutch unit 1, even if a torque greater than an allowable torque for the output-side clutch 20 is input from the output side of the drive shaft 2, the lock mechanism 50 prevents rotation of the drive shaft 2.

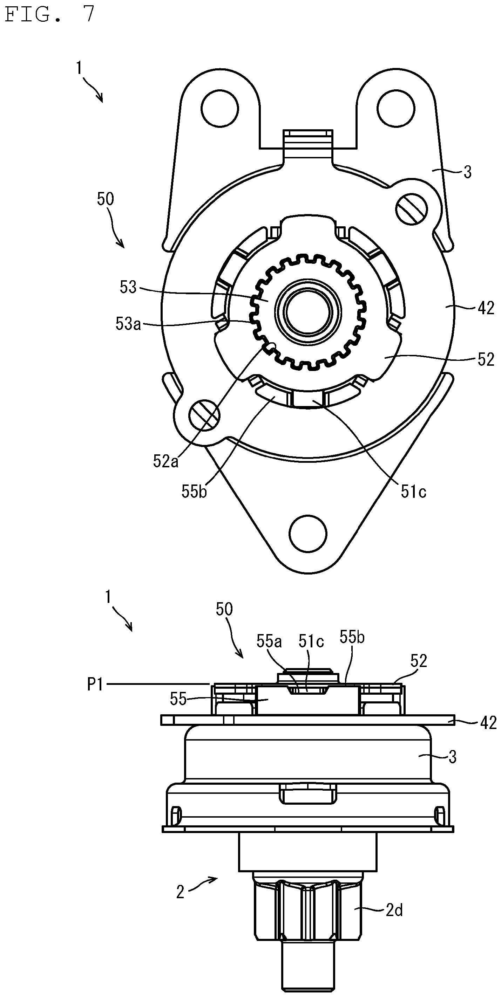

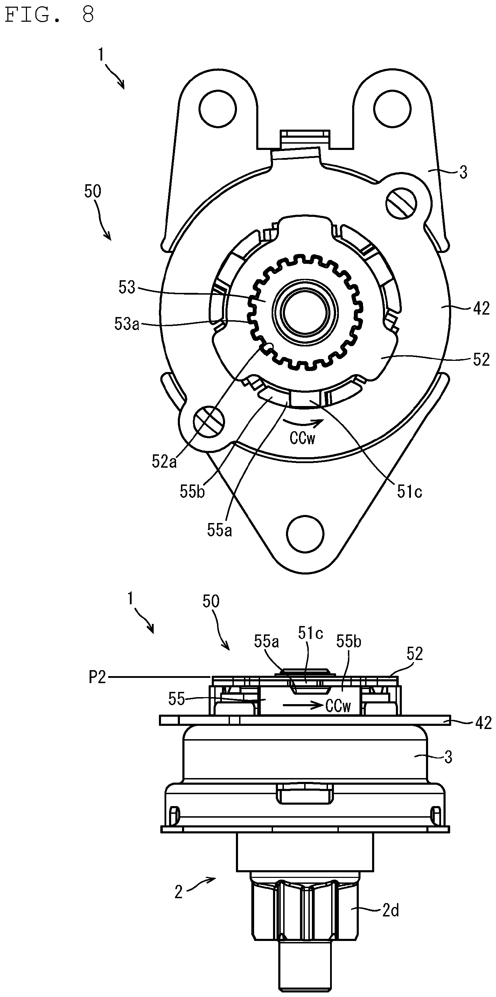

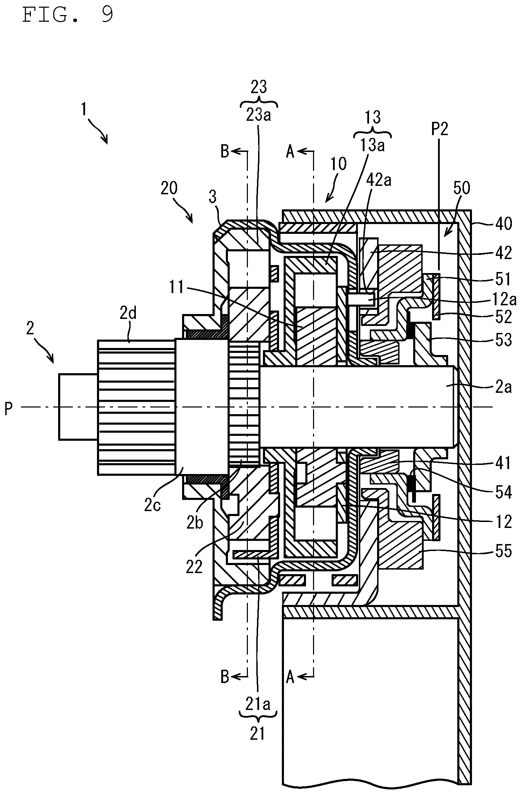

Next, with reference to Figs. 1 to 9, an operation of the clutch unit 1 will be described. Fig. 7 includes a plan view and a side view of the lock mechanism 50 in the engaged position P1 in the clutch unit 1. Fig. 8 includes a plan view and a side view of the lock mechanism 50 in the disengaged position P2 in the clutch unit 1. Fig. 9 is a cross-sectional view in the axis direction showing a configuration of the lock mechanism 50 in the disengaged position P2 in the clutch unit 1.

With the clutch unit 1, as shown in Figs. 1, 7, 8 and 9, when the operator rotates the operating lever 40 in the counterclockwise CCw direction, for example, the operating plate 42 and the disengaging part 55 fixed to the operating plate 42 rotate in the counterclockwise CCw direction. The supporting part 51c of the base part 51 located in the concave portion 55a of the disengaging part 55 moves toward the convex portion 55b of the disengaging part 55. The engaging part 52 fixed to the base part 51 moves from the engaged position P1 to the disengaged position P2. In this way, the drive shaft 2 becomes rotatable with respect to the housing 3. The drive shaft 2 supports the drive shaft-side engaging member 53 in such a manner that the drive shaft-side engaging member 53 cannot rotate about the axis P. The housing 3 supports the base part 51 and the engaging part 52 in such a manner that the base part 51 and the engaging part 52 cannot rotate about the axis P.

The distance between the step surface 51a of the base part 51 positioned in the disengaged position P2 and the drive shaft-side engaging member 53 is smaller than the distance between the step surface 51a of the base part 51 positioned in the engaged position P1 and the drive shaft-side engaging member 53. The base part 51 is subjected to the elastic force from the elastic member 54 in directions to increase the distance between the step surface 51a and the drive shaft-side engaging member 53. That is, the elastic member 54 applies an elastic force to the drive shaft-side engaging member 53 and the base part 51 that is the housing-side engaging member positioned in the disengaged position P2 in a direction to make the drive shaft-side engaging member 53 and the base part 51 move from the disengaged position P2 to the engaged position P1.

As shown in Figs. 1, 2 and 4, as the operating plate 42 is further rotated in the counterclockwise CCw direction, the engaging claws 12a of the operating bracket 12 come into contact with the circumferential ends of the operating slotted holes 42a of the operating plate 42. As a result, the operating plate 42 rotates with the input-side first rotating member 11 of the input-side clutch 10 via the operating bracket 12 in the counterclockwise CCw direction. The input-side wedge part 11c of the input-side first rotating member 11 comes closer to the input-side holding member 14 located on the counterclockwise CCw side of the input-side wedge part 11c.

The input-side holding member 14 located on the counterclockwise CCw side is pressed against the input-side cylindrical part 13a of the input-side second rotating member 13 by the input-side wedge part 11c. The input-side holding member 14 located on the clockwise Cw side comes into contact with the positioning claw 3a of the housing 3 and does not move in the circumferential direction. Therefore, the input-side holding member 14 located on the clockwise Cw side separates from the input-side wedge part 11c. With the input-side clutch 10, the position of the input-side second rotating member 13 with respect to the input-side first rotating member 11 is maintained by the input-side holding members 14. With the input-side clutch 10, the input-side first rotating member 11 and the input-side second rotating member 13 rotate integrally in the counterclockwise CCw direction.

As shown in Figs. 1, 3 and 5, when the input-side second rotating member 13 rotates in the counterclockwise CCw direction, the releasing bracket 21 of the output-side clutch 20 rotates in the counterclockwise CCw direction within the range of the releasing slotted holes 21a. In this process, the projection 22a of the output-side rotating member 22 moves in the clockwise Cw direction in the releasing slotted hole 21a. That is, the projection 22a is not in contact with the end of the releasing slotted hole 21a on the clockwise Cw side. Therefore, the output-side rotating member 22 does not rotate. The releasing claw 21b of the releasing bracket 21 moves the output-side holding member 24 located on the counterclockwise CCw side of the output-side wedge part 22c of the output-side rotating member 22 in the counterclockwise CCw direction.

When the circumferential end of the releasing slotted hole 21a comes into contact with the projection 22a of the output-side rotating member 22, the output-side rotating member 22 starts rotating with the releasing bracket 21 in the counterclockwise CCw direction. At this time, the output-side holding member 24 located on the clockwise Cw side comes off the output-side wedge part 22c. As a result, the output-side holding member 24 located on the opposite sides of the output-side wedge part 22c are not pinched between the output-side wedge part 22c and the output-side cylindrical part 23a of the output-side fixed member 23. In the output-side clutch 20, the position of the output-side fixed member 23 with respect to the output-side rotating member 22 is not maintained. That is, in the output-side clutch 20, only the output-side rotating member 22 rotates in the counterclockwise CCw direction. At the same time, the drive shaft 2 fixedly supporting the output-side rotating member 22 rotates in the counterclockwise CCw direction.

With the clutch unit 1, when a torque in the counterclockwise CCw direction or clockwise Cw direction is applied to the drive shaft 2, the torque is transmitted to the output-side rotating member 22 of the output-side clutch 20 fixedly supported on the drive shaft 2. With the output-side rotating member 22, the output-side holding members 24 are located on the clockwise Cw and counterclockwise CCw sides of the output-side wedge part 22c. Therefore, when the output-side rotating member 22 rotates in the clockwise Cw direction or counterclockwise CCw direction, the output-side holding member 24 located on the forward side of the output-side wedge part 22c in the rotational direction is pinched between the output-side wedge part 22c and the output-side cylindrical part 23a. Thus, the output-side rotating member 22 and the drive shaft 2 do not rotate with respect to the output-side fixed member 23.

With the clutch unit 1, after the operator rotates the operating lever 40 in the counterclockwise CCw direction, if the operator rotates the operating lever 40 in the clockwise Cw direction, the input-side first rotating member 11 of the input-side clutch 10 is rotated in the clockwise Cw direction via the operating plate 42 and the operating bracket 12. In the input-side clutch 10, the input-side holding member 14 pinched between the input-side wedge part 11c and the input-side cylindrical part 13a comes off the input-side wedge part 11c or the input-side cylindrical part 13a. The input-side first rotating member 11 rotates in the clockwise Cw direction by itself. Thus, the input-side clutch 10 transmits no torque to the drive shaft 2.

As shown in Figs. 7 to 9, with the clutch unit 1, after the operator rotates the operating lever 40 in the counterclockwise CCw direction, if the operator rotates the operating lever 40 in the clockwise Cw direction, the operating plate 42 and the disengaging part 55 fixed to the operating plate 42 rotate in the clockwise Cw direction. The supporting part 51c of the base part 51 located on the convex portion 55b of the disengaging part 55 moves toward the concave portion 55a of the disengaging part 55. The engaging part 52 fixed to the base part 51 having been positioned in the disengaged position P2 moves to the engaged position P1. In this way, the drive shaft 2 becomes unable to rotate with respect to the housing 3.

As described above, the clutch unit 1 includes the drive shaft-side engaging member 53 that is supported by the drive shaft 2 in such a manner that the drive shaft-side engaging member 53 cannot rotate with respect to the drive shaft 2 about the axis, the base part 51 and the engaging part 52 that are the housing-side engaging member that is supported by the housing 3 in such a manner that the housing-side engaging member cannot rotate with respect to the housing 3 about the axis, the disengaging part 55 that is supported by the operating plate 42 in such a manner that the disengaging part 55 cannot rotate integrally with the operating plate 42, which is an operating tool, about the axis, and the elastic member 54 that is located between the drive shaft-side engaging member 53 and the base part 51. As the operating lever 40 is rotated, the disengaging part 55 moves at least one of the whole of the base part 51 and the engaging part 52 and the whole of the drive shaft-side engaging member 53 from the engaged position P1 in which the drive shaft-side engaging member 53 and the engaging part 52 are in contact with each other and the drive shaft-side engaging member 53 cannot rotate with respect to the base part 51 and the engaging part 52 about the axis to the disengaged position P2 in which the drive shaft-side engaging member 53 and the engaging part 52 are not in contact with each other and the drive shaft-side engaging member 53 can rotate with respect to the engaging part 52 about the axis. Meanwhile, the elastic member 54 applies an elastic force to the drive shaft-side engaging member 53 and the base part 51 in a direction to make the drive shaft-side engaging member and the base part move from the disengaged position P2 to the engaged position P1.

With the clutch unit 1 configured as described above, one of the base part 51 and the engaging part 52 and the drive shaft-side engaging member 53 that is moved by the disengaging part 55 is moved as a whole by the disengaging part 55. Furthermore, the elastic member 54, which is a separate component, is located between the base part 51 and the drive shaft-side engaging member 53. The elastic member 54 applies an elastic force to the base part 51 and the drive shaft-side engaging member 53 in a direction to make the base part and the drive shaft-side engaging member move from the disengaged position P2 to the engaged position P1. Therefore, the base part 51 and the drive shaft-side engaging member 53 do not need to be elastically deformed to produce an elastic force in a direction to make the base part and the drive shaft-side engaging member move from the disengaged position P2 to the engaged position P1. Therefore, the base part 51 and the drive shaft-side engaging member 53 can have any shape. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

The disengaging part 55 of the clutch unit 1 moves the whole of at least one of the drive shaft-side engaging member 53 and the housing-side engaging member with respect to the drive shaft-side engaging member 53 in the axis direction or the radial direction perpendicular to the axis direction.

With the clutch unit 1 configured as described above, the whole of at least one of the base part 51 and the engaging part 52, which are the housing-side engaging member, and the drive shaft-side engaging member 53 is moved in the axis direction of the drive shaft 2 or the radial direction. Therefore, the base part 51 and the engaging part 52 and the drive shaft-side engaging member 53 do not need to be elastically deformed to produce an elastic force in a direction to make the base part and engaging part and the drive shaft-side engaging member move from the disengaged position P2 to the engaged position P1. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

The drive shaft-side engaging member 53 has a disk-like shape and has the drive shaft-side teeth 53a, which are formed by a plurality of concave and convex portions, formed along the outer edge thereof. The base part 51 and the engaging part 52 have an annular shape, and the engaging part 52 has the flange-side teeth 52a, which are formed by a plurality of concave and convex portions, formed along the inner edge thereof. In the engaged position P1, the flange-side teeth 52a of the engaging part 52, which is the housing-side engaging member, mate with the plurality of drive shaft-side teeth 53a of the drive shaft-side engaging member 53.

With the clutch unit 1 configured as described above, in the engaged position P1, the position of the drive shaft-side engaging member 53 with respect to the engaging part 52 is maintained by engagement between the drive shaft-side teeth 53a of the drive shaft-side engaging member 53 and the flange-side teeth 52a of the engaging part 52. In addition, since the drive shaft-side engaging member 53 and the engaging part 52 have teeth arranged in the circumferential direction, the engaging part 52 can be engaged with the drive shaft-side engaging member 53 when the engaging part 52 rotates with respect to the drive shaft-side engaging member 53 about the axis. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

The disengaging part 55 is a cam that moves at least one of the drive shaft-side engaging member 53 and the base part 51 and engaging part 52.

With the clutch unit 1 configured as described above, the drive shaft-side engaging member 53 or the base part 51 and engaging part 52 can be moved in the axis direction or the radial direction through a rotational operation of the operating lever 40. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

The disengaging part 55 is in contact with at least one of the drive shaft-side engaging member 53, the engaging part 52 and the base part 51 at a plurality of points.

With the clutch unit 1 configured as described above, at least one of the drive shaft-side engaging member 53 and the engaging part 52 and base part 51 can be stably moved, regardless of the shape of the drive shaft-side engaging member 53 and the engaging part 52 and base part 51. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

The input-side first rotating member 11 of the input-side clutch 10 has the input-side wedge parts 11c, which are convex portion projecting radially outward, on the outer edge thereof. The input-side second rotating member 13 of the input-side clutch 10 has the input-side cylindrical part 13a, which is a wall part extending in the axis direction, on the radially outer side of the input-side wedge parts 11c. The input-side holding members 14 are located between the input-side cylindrical part 13a and the outer edge described above. When the input-side first rotating member 11 is rotated in one direction through operation of the operating lever 40, input-side holding members 14 are pinched between the input-side wedge parts 11c and input-side cylindrical part 13a, and the input-side first rotating member 11 and the input-side second rotating member 13 integrally rotate about the axis P.

With such a configuration, the input-side first rotating member 11 and the input-side second rotating member 13, which are coupled to each other by friction between the input-side first rotating member 11 and the input-side holding member 14 and between the input-side second rotating member 13 and the input-side holding members 14, are kept unable to rotate with respect to each other by the engagement between the drive shaft-side engaging member 53 and the engaging part 52.

The lock mechanism 50 has the base part 51 and the engaging part 52, which is a member separate from the base part 51, that are the housing-side engaging member. The base part 51 and the engaging part 52 are coupled by clamping. Since the base part 51 and the engaging part 52 are coupled without using a fastening member, such as a screw, the housing-side engaging member can be compact. Therefore, the flexibility of mounting of the base part 51 and the engaging part 52, which are the housing-side engaging member, and the drive shaft-side engaging member 53 that prevent rotation of the drive shaft 2 to which a torque is transmitted from the output side can be improved.

### (Variation 1 of Embodiment 1)

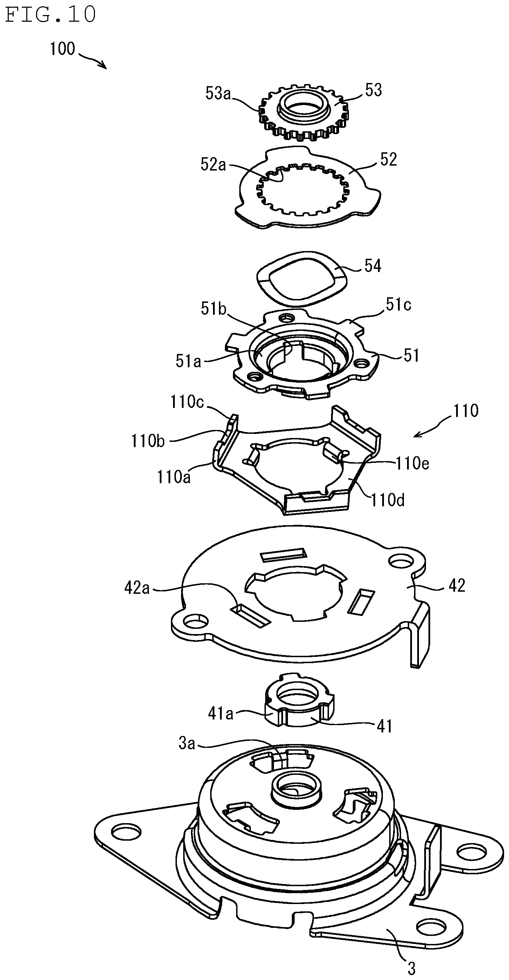

In the following, with reference to Fig. 10, a lock mechanism 100 according to a variation 1 of the embodiment 1 will be described. Fig. 10 is an exploded perspective view of components of the lock mechanism 100 having a disengaging part 110 arranged in the axial direction. In the variations described below, the same points as those of the embodiment described above will not be specifically described, and differences will be mainly described.

As shown in Fig. 10, the lock mechanism 100 is a mechanism that prevents rotation of the drive shaft 2 with respect to the housing 3. The lock mechanism 100 includes the base part 51 and the engaging part 52 that form the housing-side engaging member, the drive shaft-side engaging member 53, the elastic member 54 and a disengaging part 110.

As with the disengaging part 55, the disengaging part 110 is a member that moves the whole of the base part 51 and the engaging part 52 forming the housing-side engaging member to the engaged position P1 in which the housing-side engaging member is engaged with the drive shaft-side engaging member 53 and the disengaged position P2 in which the housing-side engaging member is not engaged with the drive shaft-side engaging member 53. The disengaging part 110 is fixed to the operating plate 42 with the center thereof coincident with the center of the bushing 41 (see the axis P of the drive shaft 2 in Fig. 1) in plan view in the axis direction. The disengaging part 110 includes a plurality of cam parts 110a and connection parts 110d. The plurality of cam parts 110a are projection parts formed by bending end portions of the connection parts 110d, which are formed by a plate-shaped member, in the axial direction. That is, the plurality of cam parts 110a and the connection parts 110d are parts of a single plate-shaped member.

The plurality of cam parts 110a are cams that move the base part 51 and the engaging part 52 in the axis direction at an end thereof in the axis direction. The plurality of cam parts 110a are located on a circle in plan view in the axis direction. Each of the plurality of cam parts 110a has a concave portion 110b and a convex portion 110c at the end thereof in the axis direction. The convex portion 110c projects from the concave portion 110b in the axis direction. The concave portion 110b and the convex portion 110c are connected by an inclined surface.

The connection parts 110d connect the plurality of cam parts 110a to each other. The connection part 110d has an operating plate fixing part 110e. The operating plate fixing part 110e is fixed to the operating plate 42. The plurality of cam parts 110a are located on a circle centered on the axis. Therefore, the plurality of cam parts 110a can rotate integrally with the operating plate 42, which is an operating tool, about the axis.

With the disengaging part 110 configured as described above, the cam parts 110a and the connection parts 110d can be formed by a plate-shaped member as a single member. Therefore, even if the disengaging part 110 has a complicated shape, since the disengaging part 110 can be formed by sheet metal working, such as laser beam machining, turret punch press or bending, the disengaging part 110 can be easily produced compared with those produced by cutting, casting, forging or the like.

### (Variation 2 of Embodiment 1)

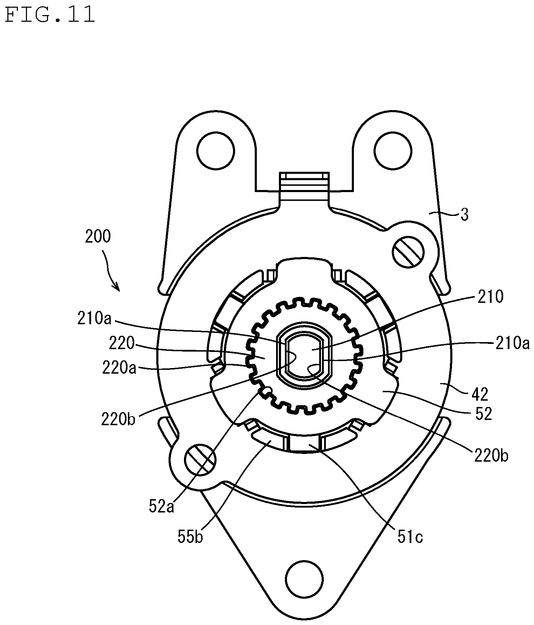

In the following, with reference to Fig. 11, a lock mechanism 200 according to a variation 2 of the embodiment 1 will be described. Fig. 11 is a plan view of a drive shaft 210 and a drive shaft-side engaging member 220 in a fixed state.

As shown in Fig. 11, the lock mechanism 200 is a mechanism that prevents rotation of the drive shaft 210 with respect to the housing 3. The lock mechanism 200 includes the base part 51 and the engaging part 52 that form the housing-side engaging member, the drive shaft-side engaging member 220, the elastic member 54 and the disengaging part 55.

The drive shaft 210 is a member that supports the drive shaft-side engaging member 220 in such a manner that the drive shaft-side engaging member 220 cannot rotate about the axis of the drive shaft 210 and cannot move in the axis direction. The drive shaft 210 has two drive shaft-side engaging surfaces 210a, which are flat engaging surfaces, in the outer peripheral surface of the part thereof that supports the drive shaft-side engaging member 220. The two drive shaft-side engaging surfaces 210a are located on opposite sides of the axis of the drive shaft 210.

The drive shaft-side engaging member 220 has drive shaft-side teeth 220a and an insertion hole in which the drive shaft 210 can be inserted. The drive shaft-side teeth 220a have the same shape as the drive shaft-side teeth 53a of the drive shaft-side engaging member 53. The insertion hole of the drive shaft-side engaging member 220 is substantially located at the center of the drive shaft-side engaging member 220 in plan view. The drive shaft-side engaging member 220 has two engaging member-side engaging surfaces 220b, which are flat engaging surfaces, in the inner peripheral surface of the insertion hole. The drive shaft 210 is press-fitted into the insertion hole with the engaging member-side engaging surfaces 220b and the drive shaft-side engaging surfaces 210a opposed to each other in contact with each other.

With such a configuration, when the drive shaft 210 rotates with respect to the drive shaft-side engaging member 220 about the axis, the engaging member-side engaging surface 220b is located on the forward side of the drive shaft-side engaging surface 210a in the rotational direction. Therefore, the drive shaft-side engaging surface 210a is pressed against the engaging member-side engaging surface 220b. That is, the drive shaft 210 and the drive shaft-side engaging member 220 cannot rotate with respect to each other because of the contact between the engaging member-side engaging surfaces 220b and the drive shaft-side engaging surfaces 210a. In this way, the capability of preventing rotation of the drive shaft 210 with respect to the drive shaft-side engaging member 220 can be improved compared with the case where the drive shaft 210 is fixed to the drive shaft-side engaging member 220 only by press-fitting.

### (Other Embodiments)

According to the embodiment described above, the clutch unit 1 has the input-side clutch 10 and the output-side clutch 20. However, the clutch unit may include only the output-side clutch.

According to the embodiment described above, in the input-side clutch 10 of the clutch unit 1, cylindrical rollers, which are the input-side holding members 14, are disposed between the input-side first rotating member 11 and the input-side second rotating member 13. However, the input-side holding member can be any member having a rolling surface. The input-side holding member may be a sphere. The same holds true for the output-side clutch.

According to the embodiment described above, in the input-side clutch 10 of the clutch unit 1, cylindrical rollers, which are the input-side holding members 14, are disposed between the input-side first rotating member 11 and the input-side second rotating member 13. However, the input-side clutch may be a friction clutch that involves no rolling body.

According to the embodiment described above, in the lock mechanism 50 of the clutch unit 1, the disengaging part 55 moves the base part 51 and the engaging part 52, which are the housing-side engaging member, to the engaged position P1 and the disengaged position P2. However, the lock mechanism can have any configuration in which the disengaging part moves at least one of the drive shaft-side engaging member and the housing-side engaging member to the engaged position P1 and the disengaged position P2.

According to the embodiment described above, in the lock mechanism 50 of the clutch unit 1, the disengaging part 55 moves the base part 51 and the engaging part 52, which are the housing-side engaging member, to the engaged position P1 and the disengaged position P2 that are located in the axis direction. However, the lock mechanism may have a configuration in which the disengaging part moves at least one of the drive shaft-side engaging member and the housing-side engaging member to an engaged position P1 and a disengaged position P2 that are located in the radial direction.

According to the embodiment described above, in the lock mechanism 50 of the clutch unit 1, the disengaging part 55 that is a cam moves the base part 51 and the engaging part 52, which are the housing-side engaging member, to the engaged position P1 and the disengaged position P2. However, the lock mechanism may have a configuration in which the disengaging part that is a link mechanism moves at least one of the drive shaft-side engaging member and the housing-side engaging member to the engaged position P1 and the disengaged position P2.

According to the embodiment described above, in the lock mechanism 50 of the clutch unit 1, the disengaging part 55 that is a cam moves the base part 51 and the engaging part 52, which are the housing-side engaging member, to the engaged position P1 and the disengaged position P2. However, the lock mechanism may have a configuration in which the disengaging part that is an actuator moves at least one of the drive shaft-side engaging member and the housing-side engaging member to the engaged position P1 and the disengaged position P2.

According to the embodiment described above, the lock mechanism 50 of the clutch unit 1 makes the flange-side teeth 52a of the engaging part 52 and the drive shaft-side teeth 53a of the drive shaft-side engaging member 53 be engaged with each other. However, the lock mechanism can have any configuration that directly or indirectly fits the housing-side engaging member and the drive shaft-side engaging member to each other. For example, the lock mechanism may be configured to fit the housing-side engaging member and the drive shaft-side engaging member to each other via another component, such as a pin.

According to the embodiment described above, in the disengaging part 110, the plurality of cam parts 110a are connected by the connection parts 110d. However, the plurality of cam parts of the disengaging part may not be connected to each other by connection parts. The plurality of cam parts of the disengaging part may be separately fixed to the operating plate 42.

In that case, each of the plurality of cam parts have, at an end thereof, a dent and a bump forming a cam that moves the base part 51 and the engaging part 52 in the axis direction and have an operating plate fixing part that fixes the cam part to the operating plate 42. The plurality of cam parts are produced by press working, shearing, sintering or the like. The plurality of cam parts are disposed on the operating plate 42 with the dent and bump forming a cam facing in the axis direction. The plurality of cam parts are fixed to the operating plate 42 via the respective operating plate fixing parts described above. That is, the plurality of cam parts can be separately fixed to any part of the operating plate 42.

As described above, the disengaging part is configured such that a required number of cam parts for moving at least one of the drive shaft-side engaging member or the housing-side engaging member can be arranged at appropriate positions on the operating tool.

The surface the concave and convex portions of the disengaging part in which the concave and convex portions are formed may be subjected to shaving or barreling. This improves the cam surface precision and durability.

According to each embodiment described above, the disengaging part 110 is fixed to the operating plate 42. However, the disengaging part may be a part of the operating plate. That is, the operating plate and the disengaging part may be formed as a single member.

According to the embodiment described above, the drive shaft 210 has two flat drive shaft-side engaging surfaces 210a in the outer peripheral surface. The drive shaft-side engaging member 220 has two flat engaging member-side engaging surfaces 220b in the inner peripheral surface. However, the drive shaft has only to have at least one flat drive shaft-side engaging surface in at least a part of the outer peripheral surface. The drive shaft-side engaging member has only to have one flat engaging member-side engaging surface in at least a part of the inner peripheral surface. The drive shaft-side engaging member and the engaging member-side engaging surface have only to be at least partially in contact with each other in the insertion hole of the drive shaft-side engaging member. The drive shaft and the drive shaft-side engaging member may be joined by splines or serrations. The side surfaces of the grooves of the splines or serrations of the drive shaft are formed as the drive shaft-side engaging surface. The side surfaces of the grooves of the splines or serrations of the insertion hole of the drive shaft-side engaging member are formed as the engaging member-side engaging surface.

Although embodiments of the present invention have been described above, the present invention is not limited to these embodiments in any way. These embodiments are shown only for illustrative purposes, and, of course, various modifications can be made without departing from the spirit of the present invention. The scope of the present invention is defined by the description of the claims and includes any equivalents and modifications of items described in the claims.

### Reference Signs List

1 clutch unit
2, 210 drive shaft
2a input-side supporting part
2b spline part
2c output-side supporting part
2d pinion gear
3 housing
10 input-side clutch
11 input-side first rotating member
11b arc-shaped part
11c input-side wedge part
13 input-side second rotating member
13a input-side cylindrical part
14 input-side holding member
15 input-side spring
20 output-side clutch
21 releasing bracket
22 output-side rotating member
22b output-side wedge part
23 output-side fixed member
23a output-side cylindrical part
24 output-side holding member
25 output-side spring
40 operating lever
42 operating plate
50, 100, 200 lock mechanism
51 base part
52 engaging part
53, 220 drive shaft-side engaging member
54 elastic member
55, 110 disengaging part
55a, 110bconcave portion
55b, 110cconvex portion
110a cam part
110d connection part
110e operating plate fixing part
P1 engaged position
P2 disengaged position

## Claims

1. A clutch unit, comprising:
a drive shaft to which a torque about an axis is input from an outside;
a housing that supports the drive shaft in such a manner that the drive shaft is rotatable about the axis;
a rotation prevention mechanism that prevents rotation of the drive shaft; and
an operating tool that is supported by the drive shaft and rotates the drive shaft about the axis,
wherein the clutch unit further comprises:
a drive shaft-side engaging member that is supported by the drive shaft in such a manner that the drive shaft-side engaging member is not rotatable with respect to the drive shaft about the axis;
a housing-side engaging member that is supported by the housing in such a manner that the housing-side engaging member is not rotatable with respect to the housing about the axis;
a disengaging part that is supported by the operating tool in such a manner that the disengaging part is rotatable integrally with the operating tool about the axis; and
an elastic member that is a member separate from the drive shaft-side engaging member and the housing-side engaging member and is located between the drive shaft-side engaging member and the housing-side engaging member,
the disengaging part moves the whole of at least one of the housing-side engaging member and the drive shaft-side engaging member from an engaged position in which the drive shaft-side engaging member and the housing-side engaging member are in contact with each other and the drive shaft-side engaging member is not rotatable with respect to the housing-side engaging member about the axis to a disengaged position in which the drive shaft-side engaging member and the housing-side engaging member are separate from each other and the drive shaft-side engaging member is rotatable with respect to the housing-side engaging member about the axis, and
the elastic member applies an elastic force to the drive shaft-side engaging member and the housing-side engaging member in a direction to make the drive shaft-side engaging member and the housing-side engaging member move from the disengaged position to the engaged position.

2. The clutch unit according to claim 1, wherein the disengaging part moves the whole of at least one of the drive shaft-side engaging member and the housing-side engaging member with respect to the drive shaft-side engaging member in an axis direction or a radial direction perpendicular to the axis direction.

3. The clutch unit according to claim 1, wherein the drive shaft-side engaging member has a disk-like shape and has a plurality of concave and convex portions along an outer peripheral edge thereof,
the housing-side engaging member has an annular shape and has a plurality of concave and convex portions along an inner peripheral edge thereof, and
in the engaged position, the plurality of concave and convex portions of the housing-side engaging member mate with the plurality of concave and convex portions of the drive shaft-side engaging member.

4. The clutch unit according to claim 1, wherein the disengaging part is a cam that moves at least one of the drive shaft-side engaging member and the housing-side engaging member.

5. The clutch unit according to claim 1, wherein the disengaging part is in contact with at least one of the drive shaft-side engaging member and the housing-side engaging member at a plurality of points.

6. The clutch unit according to claim 1, wherein the housing-side engaging member has:
a base part that is supported in such a manner that the base part is not rotatable with respect to the housing about the axis; and
an engaging part that is fixed to the base part and is to be engaged with the drive shaft-side engaging member, and
the base part and the engaging part are separate components.

7. The clutch unit according to claim 6, wherein the base part and the engaging part are coupled to each other by clamping.

8. The clutch unit according to claim 1, wherein the rotation prevention mechanism has:
a rotating member that is supported by the drive shaft in such a manner that the rotating member is not rotatable with respect to the drive shaft about the axis;
a fixed member that is supported by the housing in such a manner that the fixed member is not rotatable with respect to the housing and rotatably supports the drive shaft;
a holding member that is located between the rotating member and the fixed member and, when the drive shaft rotates, holds the rotating member in such a manner that the rotating member is not rotatable with respect to the fixed member about the axis; and
a disengaging member that is supported by the operating tool and, in response to operation of the operating tool, moves the holding member to a position in which the rotating member is rotatable with respect to the fixed member about the axis.

9. The clutch unit according to claim 8, wherein the rotating member has a convex portion projecting outward in a radial direction on an outer edge thereof,
the fixed member has a wall part extending in an axis direction on an outer side in the radial direction of the convex portion of the rotating member, and
the holding member is located between the wall part and the outer edge.

10. The clutch unit according to claim 1, wherein the disengaging part has:
a cam part that moves the whole of at least one of the drive shaft-side engaging member and the housing-side engaging member from the engaged position to the disengaged position; and
a connection part that connects the cam part to the operating tool, and
the cam part and the connection part are formed by a plate-shaped member as a single member.

11. The clutch unit according to claim 1, wherein the disengaging part is formed by a plurality of cam parts that move the whole of at least one of the drive shaft-side engaging member and the housing-side engaging member from the engaged position to the disengaged position.

12. The clutch unit according to claim 1, wherein the drive shaft-side engaging member has an insertion hole that has a flat engaging member-side engaging surface in at least a part of an inner peripheral surface thereof, and
the drive shaft has a flat drive shaft-side engaging surface in at least a part of an outer peripheral surface thereof and is inserted in the insertion hole with at least a part of the drive shaft-side engaging surface in contact with at least a part of the engaging member-side engaging surface.
